# EUROPEAN PATENT SPECIFICATION

(11) **EP 3 287 816 B1**
(45) Date of publication and mention of the grant of the patent: **25.01.2023**
(21) Application number: 17160046.3
(22) Date of filing: 09.03.2017
(51) Int. Cl.: G01V 8/00

(54) **MILLIMETER-WAVE IMAGING SYSTEM**
MILLIMETERWELLEN-BILDGEBUNGSSYSTEM
SYSTÈME D'IMAGERIE À ONDES MILLIMÉTRIQUES

(30) Priority: 25.08.2016 CN 201610727538
(43) Date of publication of application: 28.02.2018
(73) Proprietor: Nuctech Company Limited, TongFang Building, Shuangqinglu, Haidian District Beijing 100084 (CN)
(72) Inventor: ZHAO, Ziran, Haidian District, Beijing 100084 (CN); CHEN, Zhiqiang, Haidian District, Beijing 100084 (CN); LI, Yuanjing, Haidian District, Beijing 100084 (CN); WU, Wanlong, Haidian District, Beijing 100084 (CN); SHEN, Zongjun, Haidian District, Beijing 100084 (CN); JIN, Yingkang, Haidian District, Beijing 100084 (CN); QIAO, Lingbo, Haidian District, Beijing 100084 (CN); ZHENG, Lei, Haidian District, Beijing 100084 (CN)
(74) Representative: Boult Wade Tennant LLP

(56) References cited:
- CN-A- 103 197 353
- CN-A- 105 068 069
- CN-U- 202 372 651
- US-A1- 2005 122 249

## Description

### FIELD

The present disclosure generally relates to a technical field of security check, and more particularly to a millimeter wave imaging system for security check to an uncooperative human body.

### BACKGROUND

In recent years, the global security situation has increasingly worsened and terrorist attacks frequently occur at public areas such as airports, subway stations and the like. It is urgently needed to provide more efficient security check to maintenance public safety without disturbing normal travel of passengers. Existing X-ray security check equipment for luggage check has been well developed, which may analyze projections of objects in the luggage or a three dimensional tomographic image of the whole luggage through transmission imaging and send out an alarm when a suspicious object is detected. However, in consideration of privacy and safety, it is relatively difficult to check objects carried on bodies of the passengers. Currently, a most common technique is to use a metal detector, but the metal detector only responds to metals and needs assistance of a security inspector to conduct the detection. A newly developed millimeter wave imaging technology is a main trend of current security check technologies for human body check. In the premise of ensuring the safety of a person under inspection, the millimeter wave imaging technology can be used to acquire a high resolution image of human body surface and identify prohibited articles hidden on the body, such as firearms, sharp instruments, drugs, explosives and the like.

The existing millimeter wave imaging technologies are mainly classified as active type and passive type millimeter wave imaging technologies. A passive type millimeter wave imaging system acquires the image of human body surface by detecting millimeter wave signals radiated by the human body itself. Since the temperature of the human body is comparable to the indoor environment temperature, the image acquired by the passive type millimeter wave imaging system may have low image contrast and poor image quality due to the limited detector sensitivity of the passive type millimeter wave imaging system. Therefore, such a passive type millimeter wave imaging system may not satisfy the requirement of security check at indoor areas such as airports, subway stations and the like. On the other hand, the active type millimeter wave imaging technology can be used to acquire a high quality image of human body surface by applying millimeter wave source irradiation on the human body. Currently, some related equipment for human body security check utilizing the active type millimeter wave imaging technology has been used at some airports in the United States and Europe. Existing products for human body security check utilizing the active type millimeter wave imaging technology include the Provision series of the L3 company and the Eqo of the Smith company in the United States, the QPS100 of the Rohde&Schwarz company in Germany, or the like. In practical security check, the existing active type millimeter wave imaging systems require the person under inspection to keep standing in a certain posture for a certain period in front of the security check instrument (the Eqo system of the Smith company requires the person under inspection to turn around in a certain posture). Such active type millimeter wave imaging systems need cooperation of the person under inspection to guarantee a high identification rate. In this case, the passing rate may be limited and the travel convenience of passengers may be severely impacted.

D1 (CN 105 068 069 A) discloses a millimeter wave 3D holographic imaging device including a conveyor for conveying an object located thereon in a first direction; and at least one millimeter wave transceiving module disposed beside the conveyor such that each millimeter wave transceiver module is able to scan the object when the conveyor conveys the object through the millimeter wave transceiving module, wherein each millimeter wave transceiver module is arranged with its longitudinal direction extending in a direction crossing the first direction and includes a millimeter wave transceiving antenna array for transmitting and receiving millimeter wave signals.

### SUMMARY

In view of the above problems, the present disclosure provides an active type millimeter wave imaging system and an implementation of an inspection channel for security check targeting an uncooperative human body. According to the present disclosure, a precise human body security check can be performed when a person under inspection freely passes through the inspection channel.

According to the present invention, there is provided a millimeter wave imaging system, in accordance with claim 1.

According to an embodiment of the disclosure, at least a first subset of the plurality of transmitting antenna units in the first millimeter wave transceiving antenna array and/or the second millimeter wave transceiving antenna array may have position deviations relative to each other in a horizontal direction. The first subset of the plurality of transmitting antenna units in the first millimeter wave transceiving antenna array and/or the second millimeter wave transceiving antenna array may be distributed across a whole length of the inspection channel. The first subset of the plurality of transmitting antenna units in the first millimeter wave transceiving antenna array and/or the second millimeter wave transceiving antenna array may be arranged in a row.

Likewise, at least a second subset of the plurality of transmitting antenna units in the first millimeter wave transceiving antenna array and/or the second millimeter wave transceiving antenna array may have position deviations relative to each other in a vertical direction. The second subset of the plurality of transmitting antenna units in the first millimeter wave transceiving antenna array and/or the second millimeter wave transceiving antenna array may be distributed across a whole height of the first millimeter wave transceiving antenna array. The second subset of the plurality of transmitting antenna units in the first millimeter wave transceiving antenna array and/or the second millimeter wave transceiving antenna array may be arranged in a column. The whole height of the first millimeter wave transceiving antenna array and/or the whole height of the second millimeter wave transceiving antenna array may exceed a height of a person under inspection.

In an embodiment, the transmitting antenna units in the first millimeter wave transceiving antenna array and/or the second millimeter wave transceiving antenna array may be arranged in a cross shape.

The first millimeter wave transceiving antenna array and the second millimeter wave transceiving antenna array may face each other at least in part.

The transmitting antenna units in at least one of the sub-arrays may be arranged in a row, in a column or in a cross shape. In the at least one sub-array, the row of transmitting antenna units may be located at a central position of the at least one sub-array in a height direction of the at least one sub-array, the column of transmitting antenna units may be located at a central position of the at least one sub-array in a width direction of the at least one sub-array, or a cross point of the transmitting antenna units arranged in the cross shape may be located at a center of the at least one sub-array.

The transmitting antenna units and the receiving antenna units in the first or the second millimeter wave transceiving antenna array or the sub-arrays thereof may be arranged in a two dimensional grid including rows and columns. The two dimensional grid may be a sparse grid.

The first and the second millimeter wave transceiving antenna arrays may be provided at both sides of the inspection channel as a flat array, a folded surface array including a plurality of flat arrays, or a curved surface array.

The millimeter wave transceiver may be configured to drive each sub-array to allow only a single transmitting antenna unit in a sub-array to transmit a millimeter wave signal at a same moment, and allow all receiving antenna units in the sub-array to receive the millimeter wave signal simultaneously.

The millimeter wave transceiver may be configured to drive the first and the second millimeter wave transceiving antenna arrays, to allow a millimeter wave signal transmitted by one of the first and the second millimeter wave transceiving antenna arrays, after being scattered by a person under inspection, to be received by the one antenna array itself or by the other or both of the first and the second millimeter wave transceiving antenna arrays.

According to an embodiment, the millimeter wave imaging system may further include transmitting antenna units provided on the top of the inspection channel. The transmitting antenna units on the top of the inspection channel may be distributed across a whole length of the inspection channel.

Furthermore, the millimeter wave imaging system may further include a fourth millimeter wave transceiving antenna array that may include a plurality of transmitting antenna units and a plurality of receiving antenna units arranged in an area array. The fourth millimeter wave transceiving antenna array may be provided at a corner of the Z shape to allow the fourth millimeter wave transceiving antenna array to irradiate different sides of the person under inspection when the person is passing through the inspection channel.

According to embodiments of the disclosure, the area arrays of antennas are arranged around the inspection channel. When the person under inspection is moving in the inspection channel, a multiple view imaging can be accomplished, so that a security check to an uncooperative human body can be performed.

### BRIEF DESCRIPTION OF THE DRAWINGS

Objectives, features and advantages of the present disclosure would be better understood by referring to the following description with reference to the accompanying drawings, in which:
Fig. 1(a) is a perspective diagram schematically illustrating a millimeter wave imaging system according to an embodiment of the present disclosure, and Fig. 1(b) is a diagram schematically illustrating electromagnetic wave radiation in the millimeter wave imaging system;
Figs. 2(a) to 2(d) are diagrams schematically illustrating antenna arrays for transmitting and receiving millimeter waves according to an embodiment of the present disclosure;
Figs. 3(a) to 3(c) are diagrams schematically illustrating a layout of an inspection channel according to an embodiment of the present disclosure;
Figs. 4(a) to 4(c) are diagrams schematically illustrating transmitting and receiving modes of a millimeter wave imaging system according to an embodiment of the present disclosure;
Fig. 5 is a diagram schematically illustrating transmitting antennas provided on the top of an inspection channel according to an embodiment of the present disclosure; and
Figs. 6(a) and 6(b) are diagrams schematically illustrating a layout of an inspection channel according to the invention.

### DETAILED DESCRIPTION

In the following, reference will be made to accompanying drawings to describe embodiments of the present disclosure. Additionally, in the following description, the explanation to well-known structures and techniques has been omitted to avoid unnecessarily obscuring the concepts of the disclosure.

Terms are used herein to merely describe specific embodiments of the disclosure, but not intended to limit the disclosure. The articles "a", "an", "the" and the like positioned before an element or component do not exclude the existence of multiple such elements or components, unless otherwise explicitly indicated in the context. In addition, such terms as "comprising", "comprise", "including", "include" and the like are used herein to indicate the existence of listed features, steps, operations and/or components, but not exclude the existence or addition of one or more unlisted other features, steps, operations and/or components.

All terms (including technical and scientific terms) used herein have meanings commonly understood by those in the related arts, unless otherwise defined. It is to be noted that terms used herein should be construed to have meanings consistent with the context of the description, instead of being construed in an ideal or rigid way.

The accompanying drawings include some block diagrams and/or flow charts. It should be understood that some blocks or combinations of blocks in the block diagrams and/or flow charts can be implemented by computer program instructions. These computer program instructions can be provided to a processor of an all-purpose computer, an application-specific computer or other programmable data processing apparatus, so that modules for implementing functions/operations illustrated in the block diagrams and/or flow charts can be built up when these instructions are executed by the processor.

Therefore, the technology of the present disclosure may be implemented in manners of hardware and/or software (including firmware, microcode, etc). In addition, the technology of the present disclosure may be implemented by a computer program product on a computer readable medium having instructions stored in. The computer program product may be used by or in combination with an instruction executable system. In the context of the present disclosure, the computer readable medium can be any medium capable of containing, storing, carrying, propagating or transmitting instructions. For example, the computer readable medium may include but not be limited to electrical, magnetic, optical, electromagnetic, infrared or semiconductor systems, apparatus, devices or propagating media. Specific examples of the computer readable medium may include: a magnetic storage device, e.g. a magnetic tape or a hard disk (HDD); an optical storage device, e.g. an optic disk (CD-ROM); a memory, e.g. a random access memory (RAM) or a flash memory; and/or a wired/wireless communication link.

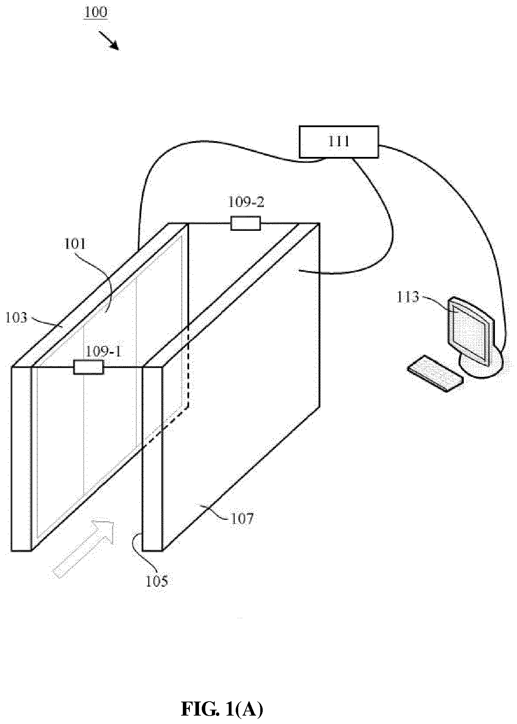

Fig. 1(a) is a perspective diagram schematically illustrating a millimeter wave imaging system according to an embodiment of the present disclosure.

As illustrated in Fig. 1(a), the millimeter wave imaging system 100 according to the embodiment includes a first millimeter wave transceiving antenna array 101 and a second millimeter wave transceiving antenna array 105 respectively provided at two opposite sides (e.g. left and right sides in Fig. 1(a)) of an inspection channel (as indicated by the arrow in Fig. 1(a)). Each millimeter wave transceiving antenna array includes a plurality of transmitting antenna units and a plurality of receiving antenna units configured to transmit and receive millimeter wave signals, so as to conduct security check on a person under inspection who is passing (e.g. walking) through the inspection channel. According to the embodiment of the present disclosure, the transmitting antenna units and the receiving antenna units in each millimeter wave transceiving antenna array are arranged in an area array. The configuration of each millimeter wave transceiving antenna array will be further described in detail below.

In the embodiment, the first millimeter wave transceiving antenna array 101 and the second millimeter wave transceiving antenna array 105 are facing each other to define the inspection channel therebetween. However, the disclosure is not limited to this configuration. For example, the first millimeter wave transceiving antenna array 101 and the second millimeter wave transceiving antenna array 105 may face each other in part or not face each other at all. That is, the first millimeter wave transceiving antenna array 101 and the second millimeter wave transceiving antenna array 105 may deviate from each other or even have no facing regions at all.

Furthermore, the millimeter wave imaging system 100 also includes a first millimeter wave transceiver 103 and a second millimeter wave transceiver 107 respectively configured to drive the first and the second millimeter wave transceiving antenna arrays (specifically to drive the transmitting antenna units and the receiving antenna units therein). For example, each millimeter wave transceiver 103, 107 may generate two millimeter wave signals, in which one millimeter wave signal may be used as a transmission signal to drive the transmitting antenna units to transmit millimeter wave signals; and the other millimeter wave signal may be used as a reference signal to be mixed with millimeter wave signals received by the receiving antenna units, and then millimeter wave holographic data may be obtained by I/Q demodulation.

In the embodiment, the millimeter wave transceivers 103, 107 may be respectively provided at the back sides of the corresponding millimeter wave transceiving antenna arrays 101, 105. It is to be understood that the millimeter wave transceivers 103, 107 may be provided at different positions and may even be separated from the corresponding millimeter wave transceiving antenna arrays 101, 105. Furthermore, the embodiment is not limited to individually provide a corresponding millimeter wave transceiver for each millimeter wave transceiving antenna array. Instead, a centralized millimeter wave transceiver may be provided.

The millimeter wave transceiving antenna arrays transmit millimeter waves to irradiate a person under inspection when the person is passing through the inspection channel, and receive the millimeter waves back from the person under inspection (e.g. scattered by the person). Then the inspection data (e.g. the foregoing millimeter wave holographic data) of the person under inspection is obtained based on the received millimeter waves. The obtained inspection data may be transmitted to a data processing device 111 via a wired (e.g. cable) or a wireless (e.g. WiFi) way. The data processing device 111 may process the received inspection data (e.g. by a back-propagation algorithm) to obtain body surface images in different perspectives of the person under inspection when the person is passing through the inspection channel, so as to realize automatic alarm about suspicious objects by utilizing an automatic recognition (ATR) algorithm. The images obtained by the data processing device 111 may be displayed on a monitor terminal 113 (e.g. a display). In addition, the suspicious objects may be highlighted on the monitor terminal 113.

In an embodiment, the millimeter imaging system 100 may also include a position sensor configured to detect the position of the person under inspection (relative to the inspection channel). When it is detected that the person under inspection enters the inspection channel, the millimeter wave transceivers may be controlled to drive the millimeter wave transceiving antenna arrays to start working; and when it is detected that the person under inspection leaves the inspection channel, the millimeter wave transceivers may be controlled to drive the millimeter wave transceiving antenna to stop working. This helps to reduce system burden and save energy. The processing of sensor data and the control of the start/stop of the millimeter wave transceivers may also be conducted by the data processing device 111.

For example, the position sensor may be a proximity sensor. In the embodiment of Fig. 1(a), as illustrated, two video cameras 109-1, 109-2 are respectively positioned at an entrance and an exit of the inspection channel. For instance, when the video camera 109-1 at the entrance captures the person under inspection, it may be determined that the person under inspection is entering the inspection channel; and when the video camera 109-2 at the exit captures the person under inspection, it may be determined that the person under inspection is leaving the inspection channel.

Of course, other video cameras may be also arranged in the inspection channel to monitor, in real-time, the status of the person under inspection, so as to avoid unexpected situations.

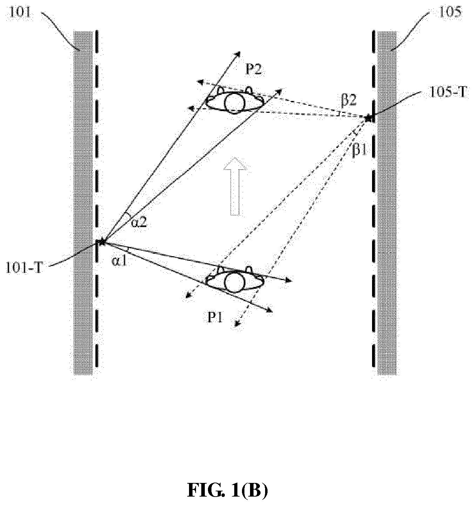

Fig. 1(b) is a diagram schematically illustrating electromagnetic wave radiation in the millimeter wave imaging system of Fig. 1(a). A transmitting antenna unit 101-T in the first millimeter wave transceiving antenna array 101 and a transmitting antenna unit 105-T in the second millimeter wave transceiving antenna array 105 are illustrated in Fig. 1(b).

As shown in Fig. 1(b), when the person under inspection enters the inspection channel, e.g. at the position P1, the millimeter waves transmitted by the transmitting antenna unit 101-T irradiate the left and front sides of the person under inspection and the irradiated area is indicated by α1; and the millimeter waves transmitted by the transmitting antenna unit 105-T irradiate the right and front sides of the person under inspection and the irradiated area is indicated by β1.

As the person under inspection is moving forward in the inspection channel, e.g. along the direction denoted by the arrow, the area of the person under inspection irradiated by the transmitting antenna unit 101-T gradually moves from the front side to the back side of the person under inspection through the left side of the person under inspection, and the area of the person under inspection irradiated by the transmitting antenna unit 105-T gradually moves from the front side to the back side of the person under inspection through the right side of the person under inspection. For example, when the person under inspection arrives at the position P2, the millimeter waves transmitted by the transmitting antenna unit 101-T irradiate the left and back sides of the person under inspection and the irradiated area is indicated by α2; and the millimeter waves transmitted by the transmitting antenna unit 105-T irradiate the right and back sides of the person under inspection and the irradiated area is indicated by β2.

The same is true for other transmitting antenna units in the first and the second millimeter wave transceiving arrays. That is, as for the person under inspection located at different positions, the areas irradiated by the transmitting antenna units in the millimeter wave transceiving antenna arrays are different. In order to realize a full view scan of the person under inspection, the transmitting antenna units in the first millimeter wave transceiving antenna array 101 and the second millimeter wave transceiving antenna array 105 may be positioned to allow the combination of the irradiated areas of the person under inspection located at different positions in the inspection channel to cover all sides of the person under inspection in the horizontal direction. That is, a 360 degree scan of the person under inspection can be realized.

Fig. 1(b) illustrated the case in the horizontal direction. Likewise, in the vertical direction (i.e. the height direction of the person under inspection), the transmitting antenna units in the first millimeter wave transceiving antenna array 101 and the second millimeter wave transceiving antenna array 105 may be positioned to allow the combination of the irradiated areas of the person under inspection located at different positions in the inspection channel to cover almost the whole height of the person under inspection.

Therefore, the layout of the transmitting antenna units in the millimeter wave transceiving antenna arrays may be determined based on the geometry of the inspection channel, the electromagnetic wave radiation range of the transmitting antenna units and the like.

The millimeter wave imaging system may conduct security check as follows. Before entering the inspection channel, the person under inspection may put the carried luggage onto a luggage security check track (not shown) to have the luggage checked by a luggage security check machine (e.g. a X-ray security check device). Then, the person under inspection may enter the inspection channel. The image of the person under inspection may be captured by the video camera 109-1 and identified by the data processing device 111. Then the millimeter wave transceiving system may start to conduct the real-time millimeter wave imaging for the person entering the inspection channel. As the person under inspection moves in the inspection channel, the millimeter wave imaging system may generate the real-time body surface images in various angles of view, display these images on the monitor device 113 (alternatively, only display action figures), and meanwhile automatically detect dangerous objects on the human body. When the person under inspection leaves the inspection channel, the image of the person under inspection may be captured by the second video camera 109-2 and identified by the data processing device 111. Then the millimeter wave transceiving system may shut down. If a suspicious object is detected during the security check, the suspicious object may be displayed on the monitor device 113 and an alarm may be sent out, and then the security inspector may control the person under inspection; if no suspicious object is detected, the person under inspection may leave the security check site with the luggage. Therefore, the person under inspection only needs to pass through the inspection channel without the requirement of stopping for human body security check by keeping a certain posture for a while.

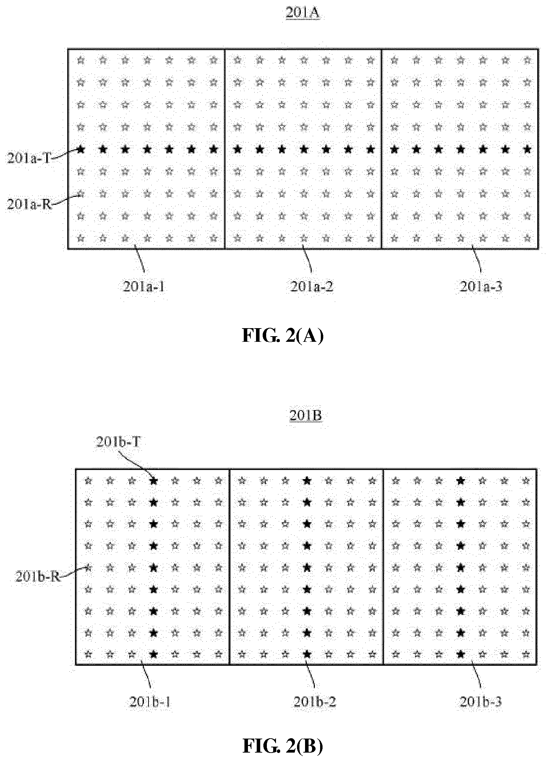

Figs. 2(a) to 2(d) are diagrams schematically illustrating millimeter wave transceiving antenna arrays according to an embodiment of the present disclosure.

As shown in Fig. 2(a), the millimeter wave transceiving antenna array 201A according to the embodiment may include three sub-arrays 201a-1, 201a-2 and 201a-3. The configuration of a sub-array will be described as follows by taking the sub-array 201a-1 as an example. The description is applicable to other sub-arrays as well.

In the embodiment, the sub-arrays 201a-1, 201a-2 and 201a-3 are arranged parallel to each other in the horizontal direction. However, the disclosure is not limited to this arrangement. For example, the sizes of the sub-arrays may be made small, so that a plurality of the sub-arrays may be arranged in two dimensions including the horizontal direction and the vertical direction.

It is to be noted that the number of the sub-arrays is not limited to three, but instead, more (e.g. four or more) or less (e.g. two) sub-arrays may be included. Moreover, the millimeter wave transceiving antenna array is not limited to be divided into sub-arrays, but may only be formed as a whole array (in this case, the array can also be regarded as only including a single sub-array). Therefore, in the following description, the explanation regarding the sub-arrays is also applicable to the millimeter wave transceiving antenna array itself, meanwhile the explanation regarding the millimeter wave transceiving antenna array is also applicable to the sub-arrays. In addition, the configurations of various sub-arrays in a same millimeter wave transceiving antenna array may be different, and the configurations of various millimeter wave transceiving antenna arrays (e.g. the millimeter wave transceiving antenna arrays 101, 105 as shown in Fig. 1(a)) in a same system may be different. Of course, it is preferred that the configuration of each sub-array in the system is the same so as to configure a plurality of millimeter wave transceiving antenna arrays (e.g., 101 and 105 as shown in Fig. 1a) with same sub-arrays (which can be manufactured by a same process), which provides convenience for the process of manufacture.

Transmitting antenna units 201a-T and receiving antenna units 201a-R in the sub-array 201a-1 may be arranged in an area array. In the figure, the antenna units are denoted by stars. It is to be noted that this is only for illustration and does not limit the shapes of the antenna units. The transmitting antenna units and the receiving antenna units may have their own suitable shapes.

For instance, the transmitting antenna units 201a-T and the receiving antenna units 201a-R in the sub-array 201a-1 may be arranged in rows and columns of a two dimensional grid. In the embodiment of Fig. 2(a), the rows of antenna units are in the horizontal direction and the columns of antenna units are in the vertical direction. The rows and the columns are perpendicular to each other and define the two dimensional grid with a shape of a regular chessboard. However, the disclosure is not limited to this arrangement. For example, the rows of antenna units may be deviated from the horizontal direction, the columns of antenna units may be deviated from the vertical direction, and the rows and the columns may be not completely perpendicular to each other.

At least a subset of the transmitting antenna units 201a-T in the sub-array 201a-1 may have position deviations relative to each other in the horizontal direction. In this case, the subset of transmitting antenna units may have different angles of view with respect to the person under inspection, which helps to have a better coverage on the person under inspection in the horizontal direction. The subset of transmitting antenna units may be distributed (e.g. evenly distributed) across the whole width (the dimension in the horizontal direction in the figure) of the sub-array 201a-1, so as to keep effective irradiation on the person under inspection when the person under inspection is passing through the sub-array. For instance, the subset of transmitting antenna units (in the embodiment, all transmitting antenna units 201a-T in the sub-array 201a-1) may be arranged in a row, as shown in Fig. 2(a). The row of transmitting antenna units may be located at a central position in the height direction (the dimension in the vertical direction in the figure) of the sub-array, so as to provide better irradiation on the person under inspection in the height direction. Of course, the subset of transmitting antenna units may also be arranged in a plurality of rows.

The row of transmitting antenna units may also be deviated from the central position, depending on their electromagnetic wave radiation ranges in the vertical direction.

In the millimeter wave transceiving antenna array 201A as shown in Fig. 2(a), three sub-arrays 201a-1, 201a-2 and 201a-3 have the same configuration (all transmitting antenna units are arranged in a row) and are arranged side by side with each other. Thus, in the whole millimeter wave transceiving antenna array 201A, the row of transmitting antenna units may be distributed across the whole length of the inspection channel.

In another embodiment, as shown in Fig. 2(b), a millimeter wave transceiving antenna array 201B according to an embodiment may include three sub-arrays 201b-1, 201b-2 and 201b-3. The configuration of a sub-array will be described as follows by taking the sub-array 201b-1 as an example. The description is applicable to other sub-arrays as well.

The sub-array 201b-1 may include a plurality of transmitting antenna units 201b-T and a plurality of receiving antenna units 201b-R that may be arranged in an area array. At least a subset of the transmitting antenna units 201b-T in the sub-array 201b-1 may have position deviations relative to each other in the vertical direction. In this case, the subset of transmitting antenna units may have different angles of view with respect to the person under inspection, which helps to have a better coverage on the person under inspection in the height direction. The subset of transmitting antenna units may be distributed (e.g. evenly distributed) across the whole height (the dimension in the vertical direction in the figure) of the sub-array 201b-1, so as to better irradiate the person under inspection in the height direction. For instance, the subset of transmitting antenna units (in the embodiment, all transmitting antenna units 201b-T in the sub-array 201b-1) may be arranged in a column, as shown in Fig. 2(b). The column of transmitting antenna units may be located at a central position in the width direction (the dimension in the vertical direction in the figure) of the sub-array, so as to provide better irradiation on the person under inspection in the height direction. Of course, the subset of transmitting antenna units may also be arranged in a plurality of columns.

The column of transmitting antenna units may also be deviated from the central position, depending on their electromagnetic wave radiation ranges in the horizontal direction.

In the millimeter wave transceiving antenna array 201B as shown in Fig. 2(b), three sub-arrays 201b-1, 201b-2 and 201b-3 have the same configuration (all transmitting antenna units are arranged in a column) and are arranged parallel to each other. The height of each sub-array 201b-1, 201b-2 and 201b-3 (and thereby the height of the millimeter wave transceiving antenna array 201B) may be greater than the height of the person under inspection (e.g. the height of each sub-array may be two meters that is greater than the heights of a majority of human beings), so that the irradiated area may cover the whole height of the person under inspection.

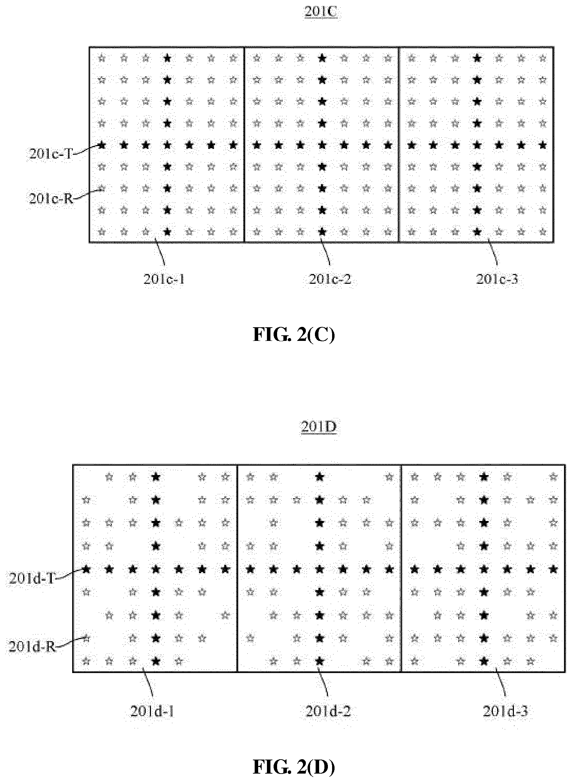

In an embodiment as illustrated by Fig. 2(c), the layouts shown in Fig. 2(a) and Fig. 2(b) are combined. For instance, as shown in Fig. 2(c), a millimeter wave transceiving antenna array 201C according to an embodiment may include three sub-arrays 201c-1, 201c-2 and 201c-3. In each sub-array, at least a first subset of the transmitting antenna units 201c-T may have position deviations relative to each other in the horizontal direction, and at least a second subset of the transmitting antenna units 201c-T may have position deviations relative to each other in the vertical direction. In the embodiment, the transmitting antenna units in each sub-array may be arranged in a cross shape that may have an intersection point located at the center of the sub-array. In addition, the receiving antenna units 201c-R in each sub-array may be provided at other positions in the two dimensional grid.

In the embodiments shown in Figs. 2(a) to 2(c), the antenna units in each sub-array are provided at respective element points (intersection points of rows and columns) in the two dimensional grid. According to embodiments of the disclosure, the antenna units of at least one sub-array may be arranged sparsely. That is, there may be no antenna units at some element points in the two dimensional grid (in this case, the grid can be referred to as a "sparse grid"). For example, as shown in Fig. 2(d), a millimeter wave transceiving antenna array 201D according to an embodiment may include the sub-arrays 201d-1, 201d-2 and 201d-3 in the form of a sparse grid. The transmitting antenna units 201d-T in each sub-array may be arranged in accordance with the above described layout (in the embodiment, the case of arrangement in a cross shape is illustrated), but the receiving antenna units 201d-R may be arranged sparsely, instead of being configured across the whole area of the sub-array as illustrated in the foregoing embodiments. Thereby the number of the receiving antenna units may be reduced. Of course, although the receiving antenna units 201d-R may be arranged sparsely, they may be still arranged in an area array but not be reduced to e.g. a line array.

Figs. 2(a)-2(d) only illustrate a few of layout examples of the antenna units, which may not be used to limit the disclosure. The antenna units may be arranged in other forms, as long as it is ensured that the person under inspection can be fully irradiated and detected by millimeter waves when passing through the inspection channel. Furthermore, a few of different layouts have been individually described with reference to Figs. 2(a) to 2(d), but it is not intended to exclude the use of the combination of these layouts. For example, a certain millimeter transceiving antenna array may include sub-arrays respectively arranged in various layouts selected from the foregoing layouts.

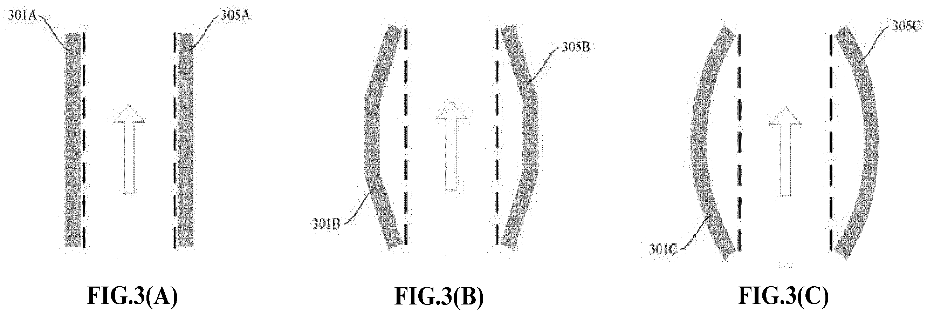

Figs. 3(a) to 3(c) are diagrams schematically illustrating a layout of an inspection channel according to an embodiment of the present disclosure.

As shown in Fig. 3(a), a first millimeter wave transceiving antenna array 301A and a second millimeter wave transceiving antenna array 305A may be an area array in the form of a plane. In the embodiment, the millimeter transceiving antenna array may conduct a plane scan instead of a cylinder scan. The millimeter wave holographic imaging algorithm required by the plane scan may be more simple and accurate than that required by the cylinder scan.

In another embodiment as illustrated by Fig. 3(b), a first millimeter wave transceiving antenna array 301B and a second millimeter wave transceiving antenna array 305B may be a folded surface array including a plurality of connected area arrays (e.g. each area array includes one or more sub-arrays). In another embodiment as illustrated by Fig. 3(c), a first millimeter wave transceiving antenna array 301C and a second millimeter wave transceiving antenna array 305C may be a curved surface (e.g. a cylinder) array.

In these embodiments, the first millimeter wave transceiving antenna array 301A and the second millimeter wave transceiving antenna array 305A may be provided at two sides of the inspection channel and face each other; of course, they may also be deviated from each other.

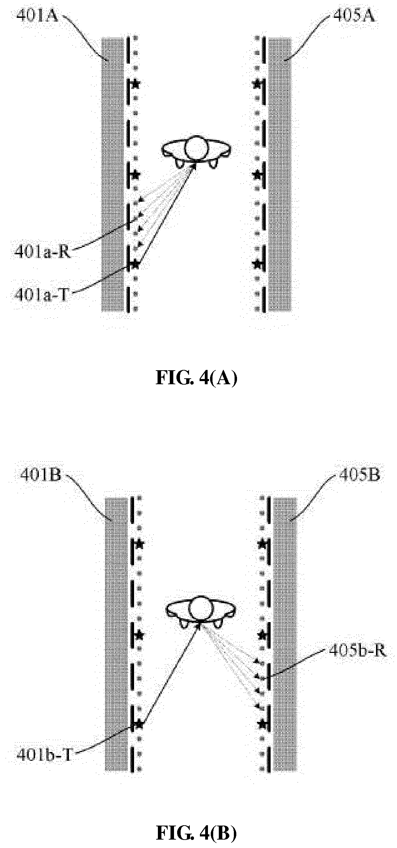

Figs. 4(a) to 4(c) are diagrams schematically illustrating transmitting and receiving modes of the millimeter wave imaging system according to an embodiment of the present disclosure.

As illustrated by Fig. 4(a), millimeter wave signals may be transmitted by transmitting antenna units 401a-T in a first millimeter transceiving antenna array 401A provided at a side of an inspection channel, scattered by a person under inspection, and then received by receiving antenna units 401a-R in the first millimeter transceiving antenna array 401A (generally received by the receiving antenna units in a same sub-array as the transmitting antenna units, and alternatively received by the receiving antenna units in other sub-arrays). The same is true for a second millimeter transceiving antenna array 405A provided at another side of the inspection channel. That is, millimeter wave signals transmitted by transmitting antenna units in the antenna array 405A may be received by receiving antenna units in the antenna array 405A after being scattered. A second millimeter wave transceiving antenna array 405A may not receive the millimeter wave signals transmitted by the first millimeter transceiving antenna array 401A (e.g. by driving the receiving antenna units in the first millimeter wave transceiving antenna array 401A to have a receiving frequency or frequency band as same as a transmitting frequency or frequency band of the array 401A, and meanwhile driving the receiving antenna units in the second millimeter wave transceiving antenna array 405A to have a receiving frequency or frequency band different from the transmitting frequency or frequency band of the first millimeter transceiving antenna array 401A), and vice versa.

In another embodiment, as illustrated by Fig. 4(b), millimeter wave signals may be transmitted by transmitting antenna units 401b-T in a first millimeter transceiving antenna array 401B provided at one side of an inspection channel, and after being scattered, received by receiving antenna units 405b-R in a second millimeter transceiving antenna array 405B provided at the other side of the inspection channel. Likewise, millimeter wave signals transmitted by transmitting antenna units in the second millimeter wave transceiving antenna array 405B, after being scattered, may be received by receiving antenna units in the first millimeter transceiving antenna array 401B. The first millimeter wave transceiving antenna array 401B may not receive the millimeter wave signals transmitted by the transmitting antenna units in the array itself(e.g. by driving the receiving antenna units in the first millimeter wave transceiving antenna array 401B to have a receiving frequency or frequency band different from a transmitting frequency or frequency band of the array 401B, and meanwhile driving the receiving antenna units in the second millimeter wave transceiving antenna array 405B to have a receiving frequency or frequency band as same as the transmitting frequency or frequency band of the first millimeter transceiving antenna array 401B), and the second millimeter wave transceiving antenna array 405B may not receive the millimeter wave signals transmitted by the transmitting antenna units in the array itself.

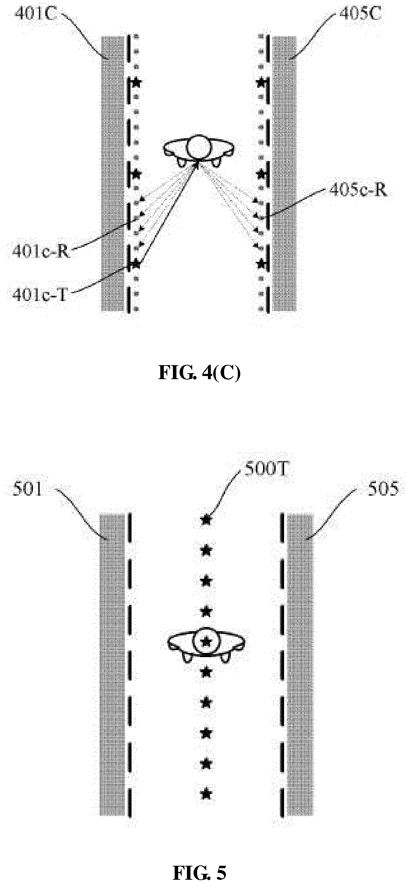

In another embodiment, as illustrated by Fig. 4(c), millimeter wave signals may be transmitted by transmitting antenna units 401c-T in a first millimeter transceiving antenna array 401C provided at one side of an inspection channel, and after being scattered, received by both receiving antenna units 401c-R in the array 401C and receiving antenna units 405c-R in a second millimeter transceiving antenna array 405C provided at the other side of the inspection channel (e.g. this can be implemented by driving the receiving antenna units 401c-R in the first millimeter transceiving antenna array 401C and the receiving antenna units 405c-R in the second millimeter transceiving antenna array 405C to have a receiving frequency or frequency band as same as a transmitting frequency or frequency band of the transmitting antenna units 401c-T). Likewise, millimeter wave signals transmitted by transmitting antenna units in the second millimeter wave transceiving antenna array 405C, after being scattered, may be received by both the receiving antenna units in the array 405C and the receiving antenna units in the first millimeter transceiving antenna array 401C.

According to an embodiment of the disclosure, a heterodyne mixing technique may be applied. Specifically, millimeter wave signals received by a receiving antenna unit may be mixed with a local oscillator signal synchronized to a corresponding transmitting antenna unit.

Furthermore, according to an embodiment of the disclosure, with respect to a same sub-array in the millimeter wave transceiving antenna array, only a single transmitting antenna unit transmits millimeter wave signals at one moment, while the other transmitting antenna units do not transmit at the same moment. On the other hand, the receiving antenna units in the same sub-array may receive the millimeter wave signals all together (certainly, the receiving antenna units in other sub-arrays may also receive the signals), so as to obtain a set of inspection data. Then, another set of inspection data may be obtained by switching the transmitting antenna units in the sub-array, until the scan of all transmitting antenna units in the sub-array is accomplished. The transmitting antenna units in different sub-arrays may transmit at different moments (to effectively avoid interference), but certainly may transmit at a same moment as well.

Additionally, in order to avoid interference among different sub-arrays (e.g. different sub-arrays in a same millimeter wave transceiving antenna array, or sub-arrays in different millimeter wave transceiving antenna arrays), especially the interference that occurs when the sub-arrays are working simultaneously, the strategies of frequency division and/or position deviation may be applied. Specifically, in the strategy of frequency division, different sub-arrays may operate at different frequencies or different frequency bands. For example, the transmitted or received millimeter wave signals may be wideband signals, e.g. wideband signals with a frequency band of 24-30 GHz. The scan of the wideband signals may be achieved by utilizing linear frequency modulated continuous wave (FMCW) or step frequency continuous wave (SFCW), in which the number of frequency sampling points depends on the maximum distance of imaging. For instance, a certain transmitting antenna transmits a signal of 24 GHz and the signal is received by a receiving antenna that only responses to the frequency of 24 GHz; while another transmitting antenna transmits a signal of 24.5 GHz and the signal is received by a receiving antenna that only responses to the frequency of 24.5 GHz. In the strategy of position deviation, different sub-arrays may be sequentially triggered by the control of an electronic switch. In particular, in order to avoid interferences between opposite antenna arrays when they are working simultaneously (e.g., the millimeter wave signals transmitted by the first millimeter wave transceiving antenna array is directly received by the second millimeter wave transceiving antenna array without being scattered by human body (and vice versa)), the positions of a transmitting antenna unit and a receiving antenna unit that are working simultaneously may be deviated in the horizontal or vertical direction.

Fig. 5 is a diagram schematically illustrating transmitting antennas provided on the top of an inspection channel according to an embodiment of the present disclosure.

As shown in Fig. 5, in the embodiment, there are transmitting antennas 500T provided on the top of the inspection channel, besides a first millimeter wave transceiving antenna array 501 and a second millimeter wave transceiving antenna array 505 respectively set at both sides of the inspection channel. The first millimeter wave transceiving antenna array 501 and the second millimeter wave transceiving antenna array 505, for example, may be configured as foregoing described. The transmitting antennas 500T at the top may irradiate a person under inspection from the top, thereby achieving more complete irradiation on the person under inspection.

A plurality of transmitting antennas 500T may be arranged on the top of the inspection channel in various forms. Fig. 5 illustrates an arrangement, in which the transmitting antennas 500T are arranged in a line and located in the middle of the top of the inspection channel. The line of transmitting antennas may span across the whole length of the inspection channel. However, the present disclosure is not limited to this arrangement. For instance, the transmitting antennas 500T may be arranged as a two-dimensional array in the length direction (the vertical direction in Fig. 5) and the width direction (the horizontal direction in Fig. 5) of the inspection channel.

Millimeter wave signals transmitted by the transmitting antenna 500T at the top may be received by receiving antenna units in the first millimeter transceiving antenna array 501 and/or receiving antenna units in the second millimeter transceiving antenna array 505, after being scattered. Of course, receiving antenna units may be provided at the top of the inspection channel.

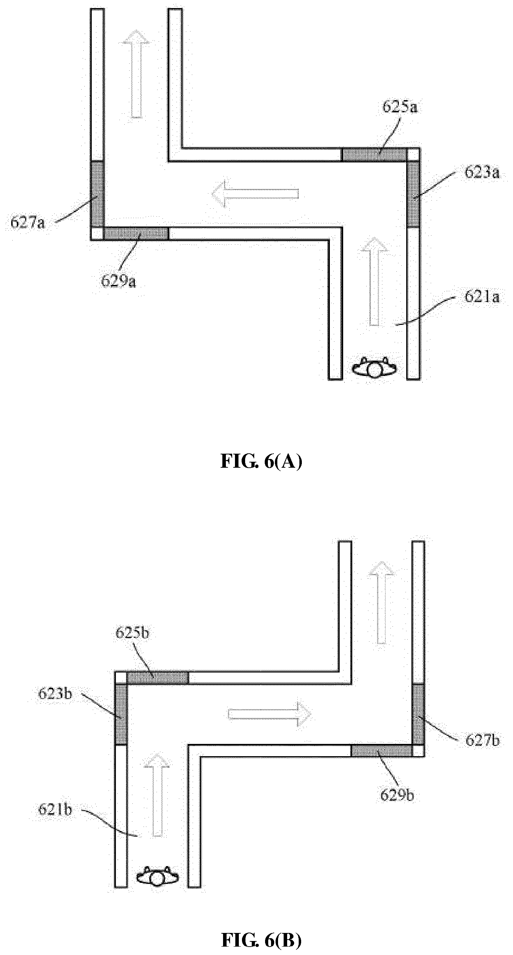

Figs. 6(a) and 6(b) are diagrams schematically illustrating a layout of an inspection channel according to the invention.

As described above, the inspection channel extends nearly in a line, but the disclosure is not limited to this. As shown in Figs. 6(a) and 6(b), the inspection channel are in a bending shape, e.g. a Z shape. In the invention as illustrated in Fig. 6(a) and 6(b), the angles between individual sides of the Z shape are approximately 90 degrees, but the disclosure is not limited to this.

As shown in Fig. 6(a), millimeter wave transceiving antenna arrays 623a, 625a, 627a and 629a are respectively disposed at corners of a Z-shaped inspection channel 621a. Transmitting antenna units and receiving antenna units in such millimeter wave transceiving antenna arrays are arranged as area arrays which, for example, are configured as foregoing described.

Each of the millimeter wave transceiving antenna arrays 623a, 625a, 627a and 629a are disposed at a side of an end of a certain path in the Z-shaped inspection channel, and oriented to another path which is connected to the certain path at the end of the certain path. For example, the millimeter wave transceiving antenna array 623a is provided at a side of the top end of the bottom vertical path of the Z-shaped inspection channel 621a, and oriented to the middle path of the Z-shaped inspection channel 621a; the millimeter wave transceiving antenna array 625a is provided at a side of the right end of the middle path of the Z-shaped inspection channel 621a, and oriented to the bottom vertical path of the Z-shaped inspection channel 621a; the millimeter wave transceiving antenna array 627a is provided at a side of the bottom end of the top vertical path of the Z-shaped inspection channel 621a, and oriented to the middle path of the Z-shaped inspection channel 621a; the millimeter wave transceiving antenna array 629a is provided at a side of the left end of the middle path of the Z-shaped inspection channel 621a, and oriented to the top vertical path of the Z-shaped inspection channel 621a.

Consequently, when a person under inspection is passing through the inspection channel 621a, individual millimeter wave transceiving antenna arrays irradiate different sides of the person under inspection. Specifically, when the person under inspection is moving forward in the inspection channel 621a and the front side of the person enters the first corner region, the millimeter wave transceiving antenna array 623a acquire images of the right side of the person, and the millimeter wave transceiving antenna array 625a acquire images of the front surface of the person. Next, the person under inspection turns left, then the millimeter wave transceiving antenna array 623a acquire images of the back surface of the person, and the millimeter wave transceiving antenna array 625a acquire images of the right side of the person. When the person under inspection enters the second corner region, the millimeter wave transceiving antenna array 627a acquire images of the front surface of the person, and the millimeter wave transceiving antenna array 629a acquire images of the left side of the person. Next, the person under inspection turns right, then the millimeter wave transceiving antenna array 627a may acquire images of the left side of the person, and the millimeter wave transceiving antenna array 629a acquire images of the back surface of the person. Therefore, a full view imaging of four sides of the person under inspection is accomplished.

Alternatively, the full view imaging of the person under inspection can be achieved by only utilizing three of the four millimeter wave transceiving antenna arrays.

Fig. 6(b) illustrates another Z-shaped inspection channel 621b, in which millimeter wave transceiving antenna arrays 623b, 625b, 627b and 629b are respectively provided at the corners. Like the embodiment as illustrated in Fig. 6(a), a full view imaging of a person under inspection can be achieved by utilizing the four millimeter wave transceiving antenna arrays 623b, 625b, 627b and 629b or three of them.

According to the present disclosure, a person under inspection can freely pass through the inspection channel without the need of stopping. The passing rate of passengers is high. Therefore, the millimeter wave imaging system of the present disclosure is especially suitable for security check at locations having large passenger flow, such as Customs, subways, etc

Although each embodiment is described separately, this does not mean that measures in each embodiment cannot be advantageously used in conjunction with each other. The scope of the disclosure is limited by the appended claims and equivalence thereof.

## Claims

1. A millimeter wave imaging system (100), comprising:
an inspection channel of a Z shape;
a first millimeter wave transceiving antenna array (625a,625b) and a second millimeter wave transceiving antenna array (629a,629b) respectively provided at two opposite sides of the inspection channel, wherein each of the first and the second millimeter wave transceiving antenna arrays includes a plurality of transmitting antenna units and a plurality of receiving antenna units arranged in an area array; and
a millimeter wave transceiver (103, 107) configured to drive the plurality of transmitting antenna units and the plurality of receiving antenna units in the first and the second millimeter wave transceiving antenna arrays,
wherein the first millimeter wave transceiving antenna array (625a,625b) includes a plurality of sub-arrays;
the second millimeter wave transceiving antenna array (629a,629b) includes a plurality of sub-arrays;
each of the plurality of sub-arrays in the first millimeter wave transceiving antenna array (625a,625b) or the second millimeter wave transceiving antenna array (629a,629b) includes a plurality of transmitting antenna units and a plurality of receiving antenna units arranged in an area array; and
the millimeter wave transceiver (103, 107) is configured to drive each sub-array to allow only a single transmitting antenna unit in the sub-array to transmit a millimeter wave signal at a same moment, and allow all receiving antenna units in the sub-array to receive the millimeter wave signal simultaneously,
wherein the millimeter wave imaging system (100) further comprises:
a third millimeter wave transceiving antenna array (623a,627a,623b,627b) including a plurality of transmitting antenna units and a plurality of receiving antenna units arranged in an area array,
wherein the first, the second and the third millimeter wave transceiving antenna arrays are provided at corners of the Z shape to allow each of the first, the second and the third millimeter wave transceiving antenna arrays to irradiate different sides of a person under inspection when the person under inspection is passing through the inspection channel.

2. The millimeter wave imaging system (100) of claim 1, wherein
at least a first subset of the plurality of transmitting antenna units in the first millimeter wave transceiving antenna array (625a,625b) have position deviations relative to each other in a horizontal direction; or
at least a first subset of the plurality of transmitting antenna units in the second millimeter wave transceiving antenna array (629a,629b) have position deviations relative to each other in a horizontal direction,
and wherein
said first subset of the plurality of transmitting antenna units in the first millimeter wave transceiving antenna array (625a,625b) are distributed across a whole length of the inspection channel; or
said first subset of the plurality of transmitting antenna units in the second millimeter wave transceiving antenna array (629a,629b) are distributed across the whole length of the inspection channel.

3. The millimeter wave imaging system (100) of claim 2, wherein
said first subset of the plurality of transmitting antenna units in the first millimeter wave transceiving antenna array (625a,625b) are arranged in a row; or
said first subset of the plurality of transmitting antenna units in the second millimeter wave transceiving antenna array (629a,629b) are arranged in a row.

4. The millimeter wave imaging system (100) of any of the preceding claims, wherein
at least a second subset of the plurality of transmitting antenna units in the first millimeter wave transceiving antenna array (625a,625b) have position deviations relative to each other in a vertical direction; or
at least a second subset of the plurality of transmitting antenna units in the second millimeter wave transceiving antenna array (629a,629b) have position deviations relative to each other in a vertical direction,
and wherein
said second subset of the plurality of transmitting antenna units in the first millimeter wave transceiving antenna array (625a,625b) are distributed across a whole height of the first millimeter wave transceiving antenna array (625a,625b); or
said second subset of the plurality of transmitting antenna units in the second millimeter wave transceiving antenna array (629a,629b) are distributed across a whole height of the second millimeter wave transceiving antenna array (629a,629b).

5. The millimeter wave imaging system (100) of claim 4, wherein
said second subset of the plurality of transmitting antenna units in the first millimeter wave transceiving antenna array (625a,625b) are arranged in a column; or
said second subset of the plurality of transmitting antenna units in the second millimeter wave transceiving antenna array (629a,629b) are arranged in a column.

6. The millimeter wave imaging system (100) of any of the preceding claims, wherein
the transmitting antenna units in the first millimeter wave transceiving antenna array (625a,625b) are arranged in a cross shape; or
the transmitting antenna units in the second millimeter wave transceiving antenna array (629a,629b) are arranged in a cross shape.

7. The millimeter wave imaging system (100) of any of the preceding claims, wherein at least a part of the first millimeter wave transceiving antenna array (625a,625b) and at least a part of the second millimeter wave transceiving antenna array (629a,629b) face each other.

8. The millimeter wave imaging system (100) of any of the preceding claims, wherein the plurality of transmitting antenna units in at least one of the plurality of sub-arrays (201a, 201b, 201c, 201d) in the first millimeter wave transceiving antenna array or the second millimeter wave transceiving antenna array are arranged in a row, in a column or in a cross shape.

9. The millimeter wave imaging system (100) of claim 8, wherein in the at least one sub-array (201a, 201b, 201c, 201d), the row of transmitting antenna units are located at a central position of the at least one sub-array (201a, 201b, 201c, 201d) in a height direction of the at least one sub-array (201a, 201b, 201c, 201d), the column of transmitting antenna units are located at a central position of the at least one sub-array (201a, 201b, 201c, 201d) in a width direction of the at least one sub-array (201a, 201b, 201c, 201d), or a cross point of the transmitting antenna units arranged in the cross shape is located at a center of the at least one sub-array (201a, 201b, 201c, 201d).

10. The millimeter wave imaging system (100) of any of the preceding claims, wherein the transmitting antenna units and the receiving antenna units in the first or the second millimeter wave transceiving antenna array or in the sub-arrays (201a, 201b, 201c, 201d) of the first or the second millimeter wave transceiving antenna array are arranged in a two dimensional grid including rows and columns.

11. The millimeter wave imaging system (100) of any of the preceding claims, wherein the first and the second millimeter wave transceiving antenna arrays are provided at both sides of the inspection channel as a flat array, a folded surface array including a plurality of flat arrays, or a curved surface array.

12. The millimeter wave imaging system (100) of any of the preceding claims, wherein the millimeter wave transceiver (103, 107) is configured to drive the first and the second millimeter wave transceiving antenna arrays to allow a millimeter wave signal transmitted by one of the first and the second millimeter wave transceiving antenna arrays after being scattered by a person under inspection, to be received by the one antenna array itself, by the other, or by both of the first and the second millimeter wave transceiving antenna arrays.

13. The millimeter wave imaging system (100) of any of the preceding claims, further comprising:
one or more transmitting antenna units (101-T, 105-T, 201a-T) provided on a top of the inspection channel.

14. The millimeter wave imaging system (100) of claim 1, wherein
the millimeter wave image system (100) further comprises: a fourth millimeter wave transceiving antenna array (623a,627a,623b,627b)
including a plurality of transmitting antenna units and a plurality of receiving antenna units arranged in an area array,
wherein the fourth millimeter wave transceiving antenna array is provided at a corner of the Z shape to allow the fourth millimeter wave transceiving antenna array to irradiate different sides of the person under inspection when the person under inspection is passing through the inspection channel.

## Patentansprüche

1. Millimeterwellen-Bildgebungssystem (100), umfassend:
einen Prüfkanal in Z-Form;
eine erste Millimeterwellen-Sendeempfangsantennenanordnung (625a, 625b) und eine zweite Millimeterwellen-Sendeempfangsantennenanordnung (629a, 629b), die jeweils an zwei gegenüberliegenden Seiten des Prüfkanals bereitgestellt sind, wobei sowohl die erste als auch die zweite Millimeterwellen-Sendeempfangsantennenanordnung eine Mehrzahl von übertragenden Antenneneinheiten und eine Mehrzahl von empfangenden Antenneneinheiten umfasst, die in einer Flächenanordnung angeordnet sind; und
einen Millimeterwellen-Sendeempfänger (103, 107), der dazu ausgestaltet ist, die Mehrzahl von übertragenden Antenneneinheiten und die Mehrzahl von empfangenden Antenneneinheiten in der ersten und der zweiten Millimeterwellen-Sendeempfangsantennenanordnung zu steuern,
wobei die erste Millimeterwellen-Sendeempfangsantennenanordnung (625a, 625b) eine Mehrzahl von Unteranordnungen umfasst;
wobei die zweite Millimeterwellen-Sendeempfangsantennenanordnung (629a, 629b) eine Mehrzahl von Unteranordnungen umfasst;
wobei jede der Mehrzahl von Unteranordnungen in der ersten Millimeterwellen-Sendeempfangsantennenanordnung (625a, 625b) oder der zweiten Millimeterwellen-Sendeempfangsantennenanordnung (629a, 629b) eine Mehrzahl von übertragenden Antenneneinheiten und eine Mehrzahl von empfangenden Antenneneinheiten umfasst, die in einer Flächenanordnung angeordnet sind; und
wobei der Millimeterwellen-Sendeempfänger (103, 107) dazu ausgestaltet ist, jede Unteranordnung zu steuern, um zu ermöglichen, dass lediglich eine einzige übertragende Antenneneinheit in der Unteranordnung im selben Moment ein Millimeterwellensignal überträgt, und zu ermöglichen, dass alle empfangenden Antenneneinheiten in der Unteranordnung das Millimeterwellensignal gleichzeitig empfangen,
wobei das Millimeterwellen-Bildgebungssystem (100) ferner umfasst:
eine dritte Millimeterwellen-Sendeempfangsantennenanordnung (623a, 627a, 623b, 627b), die eine Mehrzahl von übertragenden Antenneneinheiten und eine Mehrzahl von empfangenden Antenneneinheiten umfasst, die in einer Flächenanordnung angeordnet sind,
wobei die erste, die zweite und die dritte Millimeterwellen-Sendeempfangsantennenanordnung in Ecken der Z-Form bereitgestellt sind, um zu ermöglichen, dass jeweils die erste, die zweite und die dritte Millimeterwellen-Sendeempfangsantennenanordnung unterschiedliche Seiten einer Person in Prüfung ausstrahlt, wenn die Person in Prüfung den Prüfkanal durchläuft.

2. Millimeterwellen-Bildgebungssystem (100) nach Anspruch 1, wobei
wenigstens ein erster Untersatz der Mehrzahl von übertragenden Antenneneinheiten in der ersten Millimeterwellen-Sendeempfangsantennenanordnung (625a, 625b) Positionsabweichungen relativ zueinander in horizontaler Richtung aufweist; oder
wenigstens ein erster Untersatz der Mehrzahl von übertragenden Antenneneinheiten in der zweiten Millimeterwellen-Sendeempfangsantennenanordnung (629a, 629b) Positionsabweichungen relativ zueinander in horizontaler Richtung aufweist,
und wobei
der erste Untersatz der Mehrzahl von übertragenden Antenneneinheiten in der ersten Millimeterwellen-Sendeempfangsantennenanordnung (625a, 625b) über eine gesamte Länge des Prüfkanals verteilt ist; oder
der erste Untersatz der Mehrzahl von übertragenden Antenneneinheiten in der zweiten Millimeterwellen-Sendeempfangsantennenanordnung (629a, 629b) über die gesamte Länge des Prüfkanals verteilt ist.

3. Millimeterwellen-Bildgebungssystem (100) nach Anspruch 2, wobei
der erste Untersatz der Mehrzahl von übertragenden Antenneneinheiten in der ersten Millimeterwellen-Sendeempfangsantennenanordnung (625a, 625b) in einer Reihe angeordnet ist; oder
der erste Untersatz der Mehrzahl von übertragenden Antenneneinheiten in der zweiten Millimeterwellen-Sendeempfangsantennenanordnung (629a, 629b) in einer Reihe angeordnet ist.

4. Millimeterwellen-Bildgebungssystem (100) nach einem der vorhergehenden Ansprüche, wobei
wenigstens ein zweiter Untersatz der Mehrzahl von übertragenden Antenneneinheiten in der ersten Millimeterwellen-Sendeempfangsantennenanordnung (625a, 625b) Positionsabweichungen relativ zueinander in vertikaler Richtung aufweist; oder
wenigstens ein zweiter Untersatz der Mehrzahl von übertragenden Antenneneinheiten in der zweiten Millimeterwellen-Sendeempfangsantennenanordnung (629a, 629b) Positionsabweichungen relativ zueinander in vertikaler Richtung aufweist,
und wobei
der zweite Untersatz der Mehrzahl von übertragenden Antenneneinheiten in der ersten Millimeterwellen-Sendeempfangsantennenanordnung (625a, 625b) über eine gesamte Höhe der ersten Millimeterwellen-Sendeempfangsantennenanordnung (625a, 625b) verteilt ist; oder
der zweite Untersatz der Mehrzahl von übertragenden Antenneneinheiten in der zweiten Millimeterwellen-Sendeempfangsantennenanordnung (629a, 629b) über eine gesamte Höhe der zweiten Millimeterwellen-Sendeempfangsantennenanordnung (629a, 629b) verteilt ist.

5. Millimeterwellen-Bildgebungssystem (100) nach Anspruch 4, wobei
der zweite Untersatz der Mehrzahl von übertragenden Antenneneinheiten in der ersten Millimeterwellen-Sendeempfangsantennenanordnung (625a, 625b) in einer Spalte angeordnet ist; oder
der zweite Untersatz der Mehrzahl von übertragenden Antenneneinheiten in der zweiten Millimeterwellen-Sendeempfangsantennenanordnung (629a, 629b) in einer Spalte angeordnet ist.

6. Millimeterwellen-Bildgebungssystem (100) nach einem der vorhergehenden Ansprüche, wobei
die übertragenden Antenneneinheiten in der ersten Millimeterwellen-Sendeempfangsantennenanordnung (625a, 625b) kreuzförmig angeordnet sind; oder
die übertragenden Antenneneinheiten in der zweiten Millimeterwellen-Sendeempfangsantennenanordnung (629a, 629b) kreuzförmig angeordnet sind.

7. Millimeterwellen-Bildgebungssystem (100) nach einem der vorhergehenden Ansprüche, wobei wenigstens ein Teil der ersten Millimeterwellen-Sendeempfangsantennenanordnung (625a, 625b) und wenigstens ein Teil der zweiten Millimeterwellen-Sendeempfangsantennenanordnung (629a, 629b) einander zugewandt ist.

8. Millimeterwellen-Bildgebungssystem (100) nach einem der vorhergehenden Ansprüche, wobei die Mehrzahl von übertragenden Antenneneinheiten in wenigstens einer der Mehrzahl von Unteranordnungen (201a, 201b, 201c, 201d) in der ersten Millimeterwellen-Sendeempfangsantennenanordnung oder der zweiten Millimeterwellen-Sendeempfangsantennenanordnung in einer Reihe, in einer Spalte oder kreuzförmig angeordnet ist.

9. Millimeterwellen-Bildgebungssystem (100) nach Anspruch 8, wobei in der wenigstens einen Unteranordnung (201a, 201b, 201c, 201d), die Reihe von übertragenden Antenneneinheiten in einer zentralen Position der wenigstens einen Unteranordnung (201a, 201b, 201c, 201d) in einer Höhenrichtung der wenigstens einen Unteranordnung (201a, 201b, 201c, 201d) angeordnet ist, die Spalte der übertragenden Antenneneinheiten in einer zentralen Position der wenigstens einen Unteranordnung (201a, 201b, 201c, 201d) in einer Breiterichtung der wenigstens einen Unteranordnung (201a, 201b, 201c, 201d) angeordnet ist oder ein Kreuzpunkt der übertragenden Antenneneinheiten, die in Kreuzform angeordnet sind, in einem Zentrum der wenigstens einen Unteranordnung (201a, 201b, 201c, 201d) angeordnet ist.

10. Millimeterwellen-Bildgebungssystem (100) nach einem der vorhergehenden Ansprüche, wobei
die übertragenden Antenneneinheiten und die empfangenden Antenneneinheiten in der ersten oder der zweiten Millimeterwellen-Sendeempfangsantennenanordnung oder in den Unteranordnungen (201a, 201b, 201c, 201d) der ersten oder der zweiten Millimeterwellen-Sendeempfangsantennenanordnung in einem zweidimensionalen Raster angeordnet sind, das Reihen und Spalten umfasst.

11. Millimeterwellen-Bildgebungssystem (100) nach einem der vorhergehenden Ansprüche, wobei die erste und die zweite Millimeterwellen-Sendeempfangsantennenanordnung an beiden Seiten des Prüfkanals als flache Anordnung, gefaltete Oberflächenanordnung mit einer Mehrzahl von flachen Anordnungen oder als gebogene Oberflächenanordnung bereitgestellt sind.

12. Millimeterwellen-Bildgebungssystem (100) nach einem der vorhergehenden Ansprüche, wobei der Millimeterwellen-Sendeempfänger (103, 107) dazu ausgestaltet ist, die erste und die zweite Millimeterwellen-Sendeempfangsantennenanordnung zu steuern, um zu ermöglichen, dass ein Millimeterwellensignal, das von entweder der ersten oder der zweiten Millimeterwellen-Sendeempfangsantennenanordnung nach dem Streuen durch eine Person in Prüfung übertragen wird, von der einen Antennenanordnung selbst, von der anderen oder von sowohl der ersten als auch der zweiten Millimeterwellen-Sendeempfangsantennenanordnung empfangen wird.

13. Millimeterwellen-Bildgebungssystem (100) nach einem der vorhergehenden Ansprüche, ferner umfassend:
eine oder mehrere übertragende Antenneneinheiten (101-T, 105-T, 201a-T), die an einer Oberseite des Prüfkanals bereitgestellt sind.

14. Millimeterwellen-Bildgebungssystem (100) nach Anspruch 1, wobei
das Millimeterwellen-Bildgebungssystem (100) ferner umfasst: eine vierte Millimeterwellen-Sendeempfangsantennenanordnung (623a, 627a, 623b, 627b) mit einer Mehrzahl von übertragenden Antenneneinheiten und einer Mehrzahl von empfangenden Antenneneinheiten, die in einer Flächenanordnung angeordnet sind,
wobei die vierte Millimeterwellen-Sendeempfangsantennenanordnung an einer Ecke der Z-Form bereitgestellt ist, um zu ermöglichen, dass die vierte Millimeterwellen-Sendeempfangsantennenanordnung unterschiedliche Seiten der Person in Prüfung ausstrahlt, wenn die Person in Prüfung den Prüfkanal durchläuft.

## Revendications

1. Système d'imagerie à ondes millimétriques (100), comprenant :
un canal d'inspection en forme de Z ;
un premier réseau d'antennes d'émission-réception d'ondes millimétriques (625a, 625b) et un deuxième réseau d'antennes d'émission-réception d'ondes millimétriques (629a, 629b) prévus respectivement au niveau de deux côtés opposés du canal d'inspection, chacun des premier et deuxième réseaux d'antennes d'émission-réception d'ondes millimétriques comportant une pluralité d'unités d'antenne d'émission et une pluralité d'unités d'antenne de réception agencées en un réseau matriciel ; et
un émetteur-récepteur d'ondes millimétriques (103, 107) configuré pour piloter la pluralité d'unités d'antenne d'émission et la pluralité d'unités d'antenne de réception dans les premier et deuxième réseaux d'antennes d'émission-réception d'ondes millimétriques,
dans lequel le premier réseau d'antennes d'émission-réception d'ondes millimétriques (625a, 625b) comporte une pluralité de sous-réseaux ;
le deuxième réseau d'antennes d'émission-réception d'ondes millimétriques (629a, 629b) comporte une pluralité de sous-réseaux ;
chacun de la pluralité de sous-réseaux dans le premier réseau d'antennes d'émission-réception d'ondes millimétriques (625a, 625b) ou le deuxième réseau d'antennes d'émission-réception d'ondes millimétriques (629a, 629b) comporte une pluralité d'unités d'antenne d'émission et une pluralité d'unités d'antenne de réception agencées en un réseau matriciel ; et
l'émetteur-récepteur d'ondes millimétriques (103, 107) est configuré pour piloter chaque sous-réseau afin de permettre à une seule unité d'antenne d'émission dans le sous-réseau de transmettre un signal d'ondes millimétriques au même moment, et permettre à toutes les unités d'antenne de réception dans le sous-réseau de recevoir le signal d'ondes millimétriques simultanément,
le système d'imagerie d'ondes millimétriques (100) comprenant en outre :
un troisième réseau d'antennes d'émission-réception d'ondes millimétriques (623a, 627a, 623b, 627b) comportant une pluralité d'unités d'antenne d'émission et une pluralité d'unités d'antenne de réception agencées en un réseau matriciel,
dans lequel les premier, deuxième et troisième réseaux d'antennes d'émission-réception d'ondes millimétriques sont prévus aux coins de la forme en Z pour permettre à chacun des premier, deuxième et troisième réseaux d'antennes d'émission-réception d'ondes millimétriques d'irradier différents côtés d'une personne soumise à une inspection lorsque la personne soumise à une inspection passe par le canal d'inspection.

2. Système d'imagerie à ondes millimétriques (100) de la revendication 1, dans lequel
la pluralité d'unités d'antenne d'émission d'au moins un premier sous-ensemble dans le premier réseau d'antennes d'émission-réception d'ondes millimétriques (625a, 625b) ont des écarts de position les unes par rapport aux autres dans une direction horizontale ; ou
la pluralité d'unités d'antenne d'émission d'au moins un premier sous-ensemble dans le deuxième réseau d'antennes d'émission-réception d'ondes millimétriques (629a, 629b) ont des écarts de position les unes par rapport aux autres dans une direction horizontale,
et dans lequel
la pluralité d'unités d'antenne d'émission dudit premier sous-ensemble dans le premier réseau d'antennes d'émission-réception d'ondes millimétriques (625a, 625b) sont réparties sur toute la longueur du canal d'inspection ; ou
la pluralité d'unités d'antenne d'émission dudit premier sous-ensemble dans le deuxième réseau d'antennes d'émission-réception d'ondes millimétriques (629a, 629b) sont réparties sur toute la longueur du canal d'inspection.

3. Système d'imagerie à ondes millimétriques (100) de la revendication 2, dans lequel
la pluralité d'unités d'antenne d'émission dudit premier sous-ensemble dans le premier réseau d'antennes d'émission-réception d'ondes millimétriques (625a, 625b) sont agencées en une rangée ; ou
la pluralité d'unités d'antenne d'émission dudit premier sous-ensemble dans le deuxième réseau d'antennes d'émission-réception d'ondes millimétriques (629a, 629b) sont agencées en une rangée.

4. Système d'imagerie à ondes millimétriques (100) de l'une quelconque des revendications précédentes, dans lequel
la pluralité d'unités d'antenne d'émission d'au moins un deuxième sous-ensemble dans le premier réseau d'antennes d'émission-réception d'ondes millimétriques (625a, 625b) ont des écarts de position les unes par rapport aux autres dans une direction verticale ; ou
la pluralité d'unités d'antenne d'émission d'au moins un deuxième sous-ensemble dans le deuxième réseau d'antennes d'émission-réception d'ondes millimétriques (629a, 629b) ont des écarts de position les unes par rapport aux autres dans une direction verticale,
et dans lequel
la pluralité d'unités d'antenne d'émission dudit deuxième sous-ensemble dans le premier réseau d'antennes d'émission-réception d'ondes millimétriques (625a, 625b) sont réparties sur toute la hauteur du premier réseau d'antennes d'émission-réception d'ondes millimétriques (625a, 625b) ; ou
la pluralité d'unités d'antenne d'émission dudit deuxième sous-ensemble dans le deuxième réseau d'antennes d'émission-réception d'ondes millimétriques (629a, 629b) sont réparties sur toute la hauteur du deuxième réseau d'antennes d'émission-réception d'ondes millimétriques (629a, 629b).

5. Système d'imagerie à ondes millimétriques (100) de la revendication 4, dans lequel
la pluralité d'unités d'antenne d'émission dudit deuxième sous-ensemble dans le premier réseau d'antennes d'émission-réception d'ondes millimétriques (625a, 625b) sont agencées en une colonne ; ou
la pluralité d'unités d'antenne d'émission dudit deuxième sous-ensemble dans le deuxième réseau d'antennes d'émission-réception d'ondes millimétriques (629a, 629b) sont agencées en une colonne.

6. Système d'imagerie à ondes millimétriques (100) de l'une quelconque des revendications précédentes, dans lequel
les unités d'antenne d'émission dans le premier réseau d'antennes d'émission-réception d'ondes millimétriques (625a, 625b) sont agencées en forme de croix ; ou
les unités d'antenne d'émission dans le deuxième réseau d'antennes d'émission-réception d'ondes millimétriques (629a, 629b) sont agencées en forme de croix.

7. Système d'imagerie à ondes millimétriques (100) de l'une quelconque des revendications précédentes, dans lequel au moins une partie du premier réseau d'antennes d'émission-réception d'ondes millimétriques (625a, 625b) et au moins une partie du deuxième réseau d'antennes d'émission-réception d'ondes millimétriques (629a, 629b) se font face.

8. Système d'imagerie à ondes millimétriques (100) de l'une quelconque des revendications précédentes, dans lequel la pluralité d'unités d'antenne d'émission dans au moins l'un de la pluralité de sous-réseaux (201a, 201b, 201c, 201d) dans le premier réseau d'antennes d'émission-réception d'ondes millimétriques ou le deuxième réseau d'antennes d'émission-réception d'ondes millimétriques sont agencées en une rangée, en un colonne ou en forme de croix.

9. Système d'imagerie à ondes millimétriques (100) de la revendication 8, dans lequel dans l'au moins un sous-réseau (201a, 201b, 201c, 201d), les unités d'antenne d'émission de la rangée sont situées à une position centrale de l'au moins un sous-réseau (201a, 201b, 201c, 201d) dans une direction de hauteur de l'au moins un sous-réseau (201a, 201b, 201c, 201d), les unités d'antenne d'émission de la colonne sont situées à une position centrale de l'au moins un sous-réseau (201a, 201b, 201c, 201d) dans une direction de largeur de l'au moins un sous-réseau (201a, 201b, 201c, 201d), ou un point de croisement des unités d'antenne d'émission agencées en forme de croix est situé au centre de l'au moins un sous-réseau (201a, 201b, 201c, 201d).

10. Système d'imagerie à ondes millimétriques (100) de l'une quelconque des revendications précédentes, dans lequel
les unités d'antenne d'émission et les unités d'antenne de réception dans le premier ou le deuxième réseau d'antennes d'émission-réception d'ondes millimétriques ou dans les sous-réseaux (201a, 201b, 201c, 201d) du premier ou du deuxième réseau d'antennes d'émission-réception d'ondes millimétriques sont agencées dans une grille bidimensionnelle comportant des rangées et des colonnes.

11. Système d'imagerie à ondes millimétriques (100) de l'une quelconque des revendications précédentes, dans lequel les premier et deuxième réseaux d'antennes d'émission-réception d'ondes millimétriques sont prévus au niveau des deux côtés du canal d'inspection en tant que réseau plat, réseau à surface repliée comportant une pluralité de réseaux plats, ou réseau à surface incurvée.

12. Système d'imagerie à ondes millimétriques (100) de l'une quelconque des revendications précédentes, dans lequel l'émetteur-récepteur d'ondes millimétriques (103, 107) est configuré pour piloter les premier et deuxième réseaux d'antennes d'émission-réception d'ondes millimétriques pour permettre à un signal d'ondes millimétriques transmis par l'un des premier et deuxième réseaux d'antennes d'émission-réception d'ondes millimétriques après avoir été diffusé par une personne soumise à une inspection, d'être reçu par le réseau d'antennes lui-même, par l'autre, ou par les premier et deuxième réseaux d'antennes d'émission-réception d'ondes millimétriques.

13. Système d'imagerie à ondes millimétriques (100) de l'une quelconque des revendications précédentes, comprenant en outre :
une ou plusieurs unités d'antenne d'émission (101-T, 105-T, 201a-T) prévues au niveau de la partie supérieure du canal d'inspection.

14. Système d'imagerie à ondes millimétriques (100) de la revendication 1, où
le système d'imagerie à ondes millimétriques (100) comprend en outre : un quatrième réseau d'antennes d'émission-réception d'ondes millimétriques (623a, 627a, 623b, 627b) comportant une pluralité d'unités d'antenne d'émission et une pluralité d'unités d'antenne de réception agencées en un réseau matriciel,
dans lequel le quatrième réseau d'antennes d'émission-réception d'ondes millimétriques est prévu à un coin de la forme en Z pour permettre au quatrième réseau d'antennes d'émission-réception d'ondes millimétriques d'irradier différents côtés de la personne soumise à une inspection lorsque la personne soumise à une inspection passe par le canal d'inspection.
